# EUROPÄISCHE PATENTSCHRIFT

(11) **EP 1 434 709 B1**
(45) Veröffentlichungstag und Bekanntmachung des Hinweises auf die Patenterteilung: **08.03.2006**
(21) Anmeldenummer: 02782842.5
(22) Anmeldetag: 07.10.2002
(51) Int. Cl.: B61D 27/00, B60H 1/00

(54) **LÜFTUNGSSYSTEM FÜR FAHRZEUGE**
VENTILATION SYSTEM FOR VEHICLES
SYSTEME DE VENTILATION POUR VEHICULES

(30) Priorität: 08.10.2001 DE 10149594
(43) Veröffentlichungstag der Anmeldung: 07.07.2004
(73) Patentinhaber: Bombardier Transportation GmbH, 13627 Berlin (DE)
(72) Erfinder: CHATZICHARALAMBOUS, Konstantin, 14165 Berlin (DE); MINGES, Florian, 10787 Berlin (DE); MÜLLER, Oliver, 10247 Berlin (DE)
(74) Vertreter: Meyer, Hans-Joachim
(86) Internationale Anmeldenummer: PCT/EP2002/011210
(87) Internationale Veröffentlichungsnummer: WO 2003/031248

(56) Entgegenhaltungen:
- DD-A- 236 496
- DE-A- 3 818 224
- DE-A- 4 302 990

## Beschreibung

Die Erfindung betrifft ein Lüftungssystem für Fahrzeuge..Die Erfindung ist geeignet für - aber nicht beschränkt auf - den Einsatz in Schienenfahrzeugen für den Personenverkehr.

Bekannt sind Vorrichtungen zur Luftverteilung in klimatisierten Schienenfahrzeugen mit im Dachbereich montierten Klimaanlagen. Dabei wird die behandelte Luft mit Hilfe von Zuluftkanälen von der Klimaanlage, die sich vornehmlich auf dem Dach des Fahrzeuges befindet, zu den Hauptlüftungskanälen, die sich zwischen Dach und der Innendecke des Fahrzeuges befinden, geleitet. Diese Zuluftkanäle führen von den Luftauslässen des Klimagerätes zu Öffnungen, die sich in den Hauptluftkanälen befinden. Aufgrund begrenzter Außen- und Innenmaße des Fahrzeuges kann der Raum zwischen Klimaanlagenunterseite, an der sich die Luftauslässe befinden, und der Oberseiten der Hauptlüftungskanäle sehr gering sein. Dies hat zur Folge, dass die Querschnitte der Zuluftkanäle begrenzt sind und sich dadurch hohe Luftströmungsgeschwindigkeiten ergeben, die wiederum eine starke Geräuschentwicklung bewirken. Außerdem sind bei der Montage der Klimaanlage und der Hauptlüftungskanäle Toleranzen möglich, die allein von den Zuluftkanälen ausgeglichen werden müssen um ein Entweichen der behandelten Luft zu vermeiden.

Die DE 41 18 745 C2 beschreibt ein Klimakompaktgerät für Fahrzeuge, insbesondere Schienenfahrzeuge. Dabei wird die behandelte Luft nach Durchströmen einer Beheizungseinrichtung durch seitlich angeordnete Radiallüfter abgesaugt und in seitliche Luftkanäle gedrückt, die zu Austrittsöffnungen führen, über die die Luft zu den Verteilungseinrichtungen innerhalb des Fahrzeugraumes gelangt. Da die Luftbehandlung etwa in der Mitte des Klimakompaktgerätes bzw. des Fahrzeuges beendet ist, sind die Luftkanäle zu den Austrittsöffnungen nahe den Seiten des Fahrzeuges vorgesehen. Dabei sind ein Teil der Kanäle schmal und hoch ausgeführt, damit für Verdichter und Kondensator ausreichend Platz vorhanden ist, der andere Teil der Kanäle dagegen flach und breiter, um eine möglichst große Bauhöhe für das Filter sowie den Verdampfer zuzulassen.

Die DE 196 54 633 C1 beschreibt ein Heizungs- und Lüftungssystem für Fahrgasträume in Schienenfahrzeugen, insbesondere Nahverkehrsfahrzeugen. Dabei ist ein Klimaaggregat über einen Ansaugschacht mit Saugluftleitungen sowie einem Luftverteilerschacht und einem Doppelluftkanal, bestehend aus einem Kühlluftkanal und einem Heizluftkanal, verbunden ist. Einen ähnlichen Aufbau ist in der DE 296 07 932 U1 enthalten, die eine Innenverkleidung des Deckenbereiches von Fahrzeugen, insbesondere Schienenfahrzeugen mit einem Luftkanal mit einer dachförmigen Mulde beschreibt.

Die DE 299 11 688 U1 offenbart ein Lüftungssystem für einen Personenwaggon. Hierbei ist ein Beruhigungsraum strömungstechnisch nach dem Hauptkanal angeordnet.

Die G 93 19 829 U1 beschreibt eine Anordnung von Aggregaten im Heizungs- und Lüftungssystem für Nahverkehrsfahrzeuge, insbesondere Schienenfahrzeuge. Dabei sind mehrere Einzelaggregate mit jeweils eigenen Kanalsystemen im Dachbereich angeordnet. Bei allen diesen Ausführungen kommt es zu den bereits oben dargestellten Problemen hoher Luftströmungsgeschwindigkeiten und damit verbundener starker Geräuschentwicklung sowie geringer Toleranzausgleichsmöglichkeiten der einzelnen Lüftungssystemkomponenten. Des weiteren erfordern die einzelnen Ausführungen einen mehr oder weniger starken, zusätzlichen konstruktiven Aufwand bzw. zusätzliche Vorrichtungen.

Aufgabe der Erfindung ist es, die beschriebenen Nachteile des Standes der Technik zu beseitigen und insbesondere ein Lüftungssystem für Fahrzeuge vorzuschlagen, welches zu optimalen Strömungsgeschwindigkeiten der Luft bei geringer Geräuschentwicklung führt. Gleichzeitig sollen auftretende Toleranzen der Lage der Lüftungskanäle und der Klimaanlage zueinander gut ausgleichbar sein.

Diese Aufgabe wird durch ein Lüftungssystem für Schienenfahrzeuge gemäß den Merkmalen des Anspruchs 1 gelöst. Zweckmäßige Ausgestaltungen und Weiterbildungen der Erfindung sind in den Unteransprüchen angegeben.

Das Prinzip der Erfindung besteht darin, mit Hilfe der tragenden Elemente der Dachkonstruktion des Fahrzeuges einen abgedichteten Zwischenraum zu bilden, der mit der Unterseite der oberen Dachabdeckung und der Oberseite der Hauptlüftungskanäle abschließt. Dieser Zwischenraum kann nun an beliebiger Stelle mit beliebig großen Öffnungen versehen werden, um die behandelte Luft aus dem Luftbehandlungsgerät auf die Hauptlüftungskanäle zu verteilen. Des weiteren bewirkt dieser Zwischenraum, dass die Anordnung der Hauptlüftungskanäle nicht von der Position der Luftauslässe des Klimagerätes abhängig ist. Die Lüftungskanäle können auf der gesamten Breite der Unterseite des Luftzwischenraumes plaziert werden. Dadurch können außerdem Lageabweichungen des Klimagerätes und der Hauptlüftungskanäle, die sich aus den zulässigen Toleranzen ergeben, mühelos ausgeglichen werden.

Die Vorteile der Erfindung liegen darin, dass durch die Größe der Öffnungen eine optimale Strömungsgeschwindigkeit der Luft erreicht werden kann. Somit verringert sich die Geräuschentwicklung beachtlich. Außerdem können die Öffnungen in den Abdeckungen des Zwischenraums an beliebigen Stellen eingebracht werden, so dass die Lage der Hauptlüftungskanäle nicht von den Luftauslässen des Klimagerätes abhängig ist. Da die Luft nicht direkt zu den Hauptlüftungskanälen strömt, sondern sich erst im Zwischenraum beruhigt, kann sie sich in den Hauptlüftungskanälen laminar ausbreiten. Ein weiterer großer Vorteil dieser Erfindung ist Möglichkeit, auftretende Toleranzen der Lage der Lüftungskanäle und der Klimaanlage zueinander gut ausgleichen zu können.

Die Erfindung wird anhand der in den Zeichnungen dargestellten Ausführungsbeispiele nachfolgend näher erläutert. Es zeigt schematisch und nicht maßstäblich
- Fig. 1: einen Teil eines Lüftungssystems in Draufsicht,
- Fig. 2: eine Abwandlung zu Fig. 1,
- Fig. 3: eine zweite Abwandlung zu Fig. 1,
- Fig. 4: eine dritte Abwandlung zu Fig. 1,
- Fig. 5: die Unterseite des Lüftungssystems und
- Fig. 6: eine Seitenansicht des Lüftungssystems.

### Beispiel 1:

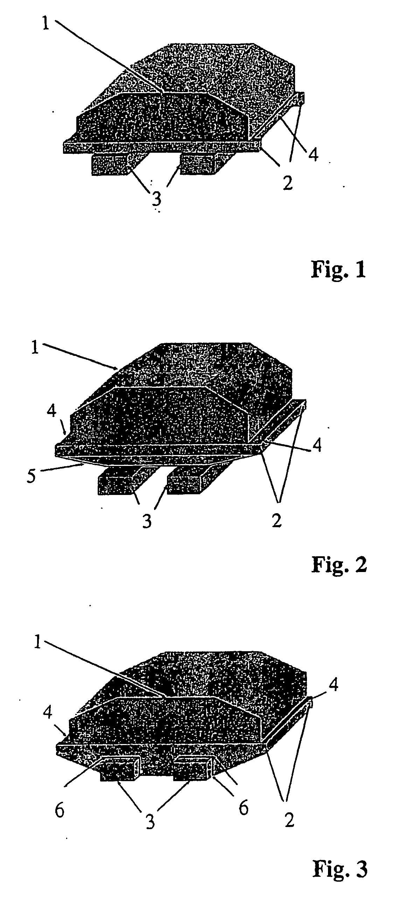

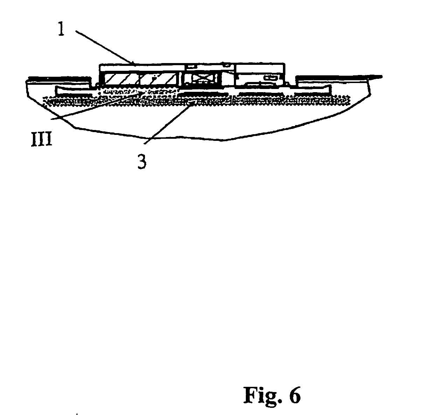

In **Fig. 1, Fig. 5** und **Fig. 6** ist ein Teil des erfindungsgemäßen Lüftungssystems in unterschiedlichen Ansichten dargestellt. Ein Klimagerät **1** ist fest auf den tragenden Elementen einer Dachkonstruktion, den Dachspriegeln **2** des Fahrzeuges montiert. Oberhalb, unterhalb und seitlich dieser Querträger bildenden Dachspriegel **2** werden Abdeckungen **4** angebracht und an den Kanten wird diese Konstruktion abgedichtet. Unter dem Klimagerät **1** befindet sich nun ein abgedichteter, als Hohlraum ausgebildeter Zwischenraum **III,** in welchen die behandelte Luft aus dem Klimagerät **1** über Luftauslässe **I, II** strömen kann. Die Luftauslässe **I** des Klimagerätes **1** sind in der Mitte der Unterseite des Klimagerätes **1** angeordnet, während die Luftauslässe **II** seitlich davon angeordnet sind. Am Zwischenraum **III** werden die Hauptlüftungskanäle **3** direkt angebracht. Öffnungen **IV** in den Hauptlüftungskanälen **3** und der Abdeckung **4** des Zwischenraums **III,** die so abgedichtet sind, dass die Luft nur in die Hauptlüftungskanäle **3** strömen kann, ermöglichen die Luftverteilung in die einzelnen Hauptlüftungskanäle **3.** Die Querschnitte dieser Öffnungen **IV** können so gewählt werden, dass eine optimale Strömungsgeschwindigkeit der Luft erreicht wird.

### Beispiel 2:

Falls die entstehende Luftkammer aufgrund baulicher Zwänge, z. B. Höhe oder Abstand der einzelnen Dachspriegel **2** für eine optimale Luftgeschwindigkeit nicht ausreichend wäre, kann die untere Abdeckung **4** gemäß **Fig. 2** so modifiziert werden, dass der entstehende, als Luftkammer ausgebildete Zwischeraum III zusätzlich vergrößert wird. Dies wird durch eine besonders geformte Abdeckung **5** erreicht. Die weiteren Einzelheiten entsprechen denen im ersten Ausführungsbeispiel.

### Beispiel 3:

Sollte durch bauliche Zwänge der Abstand zwischen der Unterseite des Klimagerätes **1** und der Oberseite des Hauptlüftungskanals **3** so gering sein, dass die Varianten, wie sie in den ersten beiden Ausführungsbeispielen beschrieben, nicht verwirklicht werden können, so wird in Abwandlung dessen folgendes vorgeschlagen. Es wird der, als Luftkammer ausgebildete Zwischenraum **III** so gemäß **Fig. 3** gestaltet, dass er von der Unterseite des Klimagerätes **1** bis zur Oberseite der Innendecke reicht. An der seitlichen Abdeckung des Zwischenraums **III,** der mit den Hauptlüftungskanälen **3** abschließt, wird ein Übergang **6** zwischen Lüftungskanal **3** und Zwischenraum **III** so abgedichtet, dass die behandelte Luft vom Zwischenraum **III** nur in die Lüftungskanäle **3** strömen kann.

### Beispiel 4:

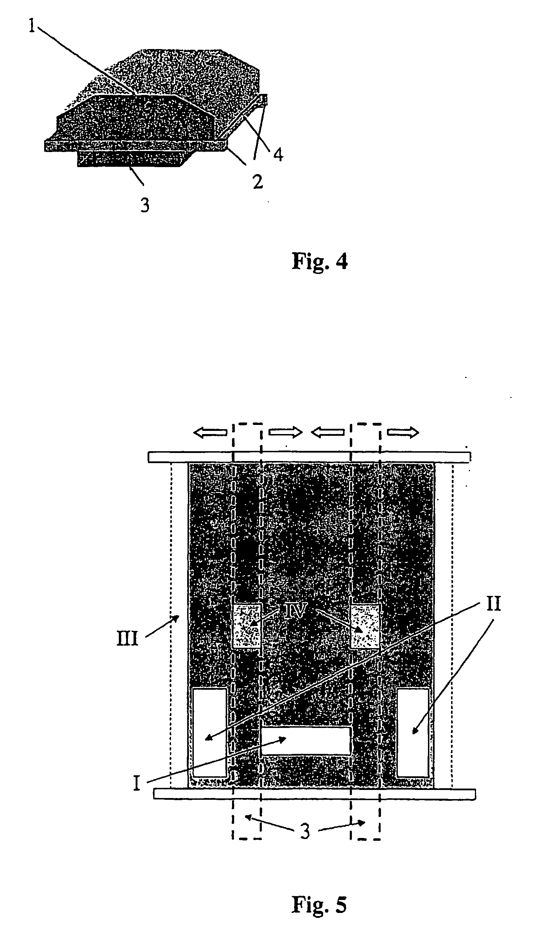

In Abwandlung zu den Ausführungsbeispielen 1 bis 3 ist es auch möglich die behandelte Luft nur auf einen oder auf mehrere Hauptlüftungskanäle **3** zu verteilen, wie in **Fig. 4** dargestellt.

Zusätzlich besteht bei allen Ausführungsbeispielen die Möglichkeit die Hauptlüftungskanäle **3** unabhängig von der Position der Luftauslässe **I, II** des Klimagerätes **1** anzuordnen. Des weiteren können bei der Montage der Lüftungskanäle **3** sehr große Toleranzen der Lage der Lüftungskanäle und des Klimagerätes ausgeglichen werden.

## Patentansprüche

1. Lüftungssystem für Fahrzeuge, insbesondere für Schienenfahrzeuge für den Personenverkehr, beinhaltend ein Luftbehandlungsgerät, insbesondere Klimagerät **(1)** und mindestens einen Hauptlüftungskanal **(3), dadurch gekennzeichnet, dass** strömungstechnisch zwischen Luftbehandlungsgerät und dem mindestens einen Hauptlüftungskanal **(3)** mindestens ein Zwischenraum **(III)** angeordnet ist, das Luftbehandlunggerät über Luftauslässe **(I, II)** mit dem mindestens einen Zwischenraum **(III)** verbunden ist, der mindestens eine Zwischenraum **(III)** über Öffnungen **(IV)** mit dem mindestens einen Hauptlüftungskanal **(3)** verbunden ist und der mindestens eine Zwischenraum **(III)** möglichst großvolumig dimensioniert ist.

2. Lüftungssystem nach Anspruch 1, **dadurch gekennzeichnet, dass** der mindestens eine Zwischenraum **(III)** so dimensioniert ist, dass sich die Luft in dem mindestens einen Hauptlüftungskanal **(3)** möglichst laminar ausbreitet.

3. Lüftungssystem nach Anspruch 1 oder 2, **dadurch gekennzeichnet, dass** der mindestens eine Zwischenraum **(III)** innerhalb der Unterseite einer oberen Dachabdeckung und der Oberseite einer Innendecke liegt, insbesondere mit der Unterseite der oberen Dachabdeckung und der Oberseite der Innendecke abschließt.

4. Lüftungssystem nach einem der Ansprüche 1 bis 3, **dadurch gekennzeichnet, dass** der mindestens eine Zwischenraum **(III)** innerhalb der Unterseite der oberen Dachabdeckung und der Oberseite des mindestens einen Hauptlüftungskanals **(3)** liegt, insbesondere mit der Unterseite der oberen Dachabdeckung und der Oberseite des mindestens einen Hauptlüftungskanals **(3)** abschließt.

5. Lüftungssystem nach einem der Ansprüche 1 bis 4, **dadurch gekennzeichnet, dass** der mindestens eine Zwischenraum **(III)** innerhalb der Unterseite des Luftbehandlungsgerätes und der Oberseite der Innendecke liegt, insbesondere mit der Unterseite des Luftbehandlungsgerätes und der Oberseite der Innendecke abschließt.

6. Lüftungssystem nach einem der Ansprüche 1 bis 5, **dadurch gekennzeichnet, dass** der mindestens eine Zwischenraum **(III)** innerhalb der Unterseite des Luftbehandlungsgerätes und der Oberseite des mindestens einen Hauptlüftungskanals **(3)** liegt, insbesondere mit der Unterseits des Luftbehandlungsgerätes und der Oberseite des mindestens einen Hauptlüftungskanals **(3)** abschließt.

7. Lüftungssystem nach einem der Ansprüche 1 bis 6, **dadurch gekennzeichnet, dass** mit Hilfe der tragenden Elemente der Dachkonstruktion, insbesondere den Dachspriegeln **(2)** und Abdeckungen **(4, 5)** des Fahrzeuges der mindestens eine, abgedichtete Zwischenraum **(III)** gebildet wird.

8. Lüftungssystem nach einem der Ansprüche 1 bis 7, **dadurch gekennzeichnet, dass** Luftauslässe **(I)** des Luftbehandlungsgerätes in der Mitte der Unterseite des Luftbehandlungsgerätes und/oder Luftauslässe **(II)** seitlich davon angeordnet sind.

9. Lüftungssystem nach einem der Ansprüche 1 bis 8, **dadurch gekennzeichnet, dass** Luftauslässe des Luftbehandlungsgerätes an der Seite des Luftbehandlungsgerätes angeordnet sind.

10. Lüftungssystem nach einem der Ansprüche 1 bis 9, **dadurch gekennzeichnet, dass** die Fläche des mindestens einen Zwischenraums **(III),** die dem Luftbehandlungsgerät zugewandt ist, mindestens 50%, vorzugsweise etwa der Fläche des Luftbehandlungsgerätes entspricht, die dem mindestens einen Zwischenraum **(III)** zugewandt ist.

11. Lüftungssystem nach einem der Ansprüche 1 bis 10, **dadurch gekennzeichnet, dass** die Querschnitte der Öffnungen **(IV)** so dimensioniert sind, dass eine optimale Strömungsgeschwindigkeit der Luft erreicht wird.

12. Lüftungssystem nach einem der Ansprüche 1 bis 11, **dadurch gekennzeichnet, dass** die Querschnitte der Luftauslässe **(I, II)** so dimensioniert sind, dass eine optimale Strömungsgeschwindigkeit der Luft erreicht wird.

13. Lüftungssystem nach einem der Ansprüche 1 bis 12, **dadurch gekennzeichnet, dass** der mindestens eine Zwischenraum **(III)** den mindestens einen Hauptlüftungskanal **(3)** mindestens teilweise umschließt.

14. Lüftungssystem nach einem der Ansprüche 1 bis 13, **dadurch gekennzeichnet, dass** mindestens zwei Hauptlüftungskanäle **(3)** mindestens je einen separaten Zwischenraum **(III)** aufweisen.

## Claims

1. Ventilation system for vehicles, in particular for rail vehicles for passenger transport, comprising an air treatment unit, in particular an air-conditioning unit (1), and at least one main ventilation duct (3), **characterized in that** at least one intermediate space (III) is arranged in respect of fluidic technology between the air treatment unit and the at least one main ventilation duct (3), the air treatment unit is connected to the at least one intermediate space (III) via air outlets (I, II), the at least one intermediate space (III) is connected to the at least one main ventilation duct (3) via openings (IV), and the at least one intermediate space (III) is dimensioned to have as large a volume as possible.

2. Ventilation system according to Claim 1, **characterized in that** the at least one intermediate space (III) is dimensioned in such a way that the air spreads in the at least one main ventilation duct (3) in as laminar as possible.

3. Ventilation system according to Claim 1 or 2, **characterized in that** the at least one intermediate space (III) lies between the underside of an upper roof covering and the upper side of an internal ceiling, in particular is delimited by the underside of the upper roof covering and the upper side of the internal ceiling.

4. Ventilation system according to any of Claims 1 to 3, **characterized in that** the at least one intermediate space (III) lies between the underside of the upper roof covering and the upper side of the at least one main ventilation duct (3), in particular is delimited by the underside of the upper roof covering and the upper side of the at least one main ventilation duct (3).

5. Ventilation system according to any of Claims 1 to 4, **characterized in that** the at least one intermediate space (III) lies between the underside of the air treatment unit and the upper side of the internal ceiling, in particular is delimited by the underside of the air treatment unit and the upper side of the internal ceiling.

6. Ventilation system according to any of Claims 1 to 5, **characterized in that** the at least one intermediate space (III) lies between the underside of the air treatment unit and the upper side of the at least one main ventilation duct (3), in particular is delimited by the underside of the air treatment unit and the upper side of the at least one main ventilation duct (3).

7. Ventilation system according to any of Claims 1 to 6, **characterized in that** the at least one, sealed intermediate space (III) is formed with the aid of the supporting elements of the roof structure, in particular the roof arches (2) and coverings (4, 5) of the vehicle.

8. Ventilation system according to any of Claims 1 to 7, **characterized in that** air outlets (I) of the air treatment unit are arranged in the centre of the underside of the air treatment unit and/or air outlets (II) are arranged at the sides thereof.

9. Ventilation system according to any of Claims 1 to 8, **characterized in that** air outlets of the air treatment unit are arranged at the side of the air treatment unit.

10. Ventilation system according to any of Claims 1 to 9, **characterized in that** the surface area of the at least one intermediate space (III) which faces towards the air treatment unit corresponds to at least 50%, preferably to approximately the whole of the surface area of the air treatment unit which faces towards the at least one intermediate space (III).

11. Ventilation system according to any of Claims 1 to 10, **characterized in that** the cross sections of the openings (IV) are dimensioned in such a way that an optimal flow velocity of the air is achieved.

12. Ventilation system according to any of Claims 1 to 11, **characterized in that** the cross sections of the air outlets (I, II) are dimensioned in such a way that an optimal flow velocity of the air is achieved.

13. Ventilation system according to any of Claims 1 to 12, **characterized in that** the at least one intermediate space (III) at least partially encloses the at least one main ventilation duct (3).

14. Ventilation system according to any of Claims 1 to 13, **characterized in that** at least two main ventilation ducts (3) each have at least one separate intermediate space (III).

## Revendications

1. Système de ventilation pour des véhicules, en particulier pour des véhicules sur rail pour le transport de voyageurs, comportant un appareil de traitement d'air, en particulier un appareil de climatisation (1) et au moins un canal de ventilation principal (3), **caractérisé en ce que**, du point de vue de la technique d'écoulement entre l'appareil de traitement d'air et le au moins un canal de ventilation principal (3), est disposé au moins un espace intermédiaire (III), l'appareil de conditionnement d'air est relié au au moins un espace intermédiaire (III) par l'intermédiaire de sorties d'air (I, II), lequel au moins un espace intermédiaire (III) est relié au au moins un canal de ventilation principal (3) par l'intermédiaire d'orifices (IV), et le au moins un espace intermédiaire (III) est dimensionné de manière à présenter le plus grand volume possible.

2. Système de ventilation selon la revendication 1, **caractérisé en ce que** le au moins un espace intermédiaire (III) est dimensionné de telle sorte que l'air se répand de la manière la plus laminaire possible dans le au moins un canal de ventilation principal (3).

3. Système de ventilation selon l'une quelconque des revendications 1 ou 2, **caractérisé en ce que** le au moins un espace intermédiaire (III) se trouve entre le côté inférieur d'un habillage de toit supérieur et le côté supérieur d'un revêtement intérieur, et est délimité en particulier par le côté inférieur de l'habillage de toit supérieur et par le côté supérieur du revêtement intérieur.

4. Système de ventilation selon l'une quelconque des ventilations 1 à 3, **caractérisé en ce que** le au moins un espace intermédiaire (III) se trouve entre le côté inférieur de l'habillage de toit supérieur et le côté supérieur du au moins un canal de ventilation principal (3), et est délimité en particulier par le côté inférieur de l'habillage de toit supérieur (3) et par le côté supérieur du au moins un canal de ventilation principal (3).

5. Système de ventilation selon l'une quelconque des revendications 1 à 4, **caractérisé en ce que** le au moins un espace intermédiaire (III) se trouve entre le côté inférieur de l'appareil de traitement d'air et le côté supérieur du revêtement intérieur, et est délimité en particulier par le côté inférieur de l'appareil de traitement d'air et par le côté supérieur du revêtement intérieur.

6. Système de ventilation selon l'une quelconque des revendications 1 à 5, **caractérisé en ce que** le au moins un espace intermédiaire (III) se trouve entre le côté inférieur de l'appareil de traitement d'air et le côté supérieur du au moins un canal de ventilation principal (3), et est délimité en particulier par le côté inférieur de l'appareil de traitement d'air et par le côté supérieur du au moins un canal de ventilation principal (3).

7. Système de ventilation selon l'une quelconque des revendications 1 à 6, **caractérisé en ce que** le au moins un espace intermédiaire (III) étanchéifié est formé à l'aide des éléments porteurs de la construction de toit, en particulier des arceaux de toit (2) et des habillages (4, 5) du véhicule.

8. Système de ventilation selon l'une quelconque des revendications 1 à 7, **caractérisé en ce que** des sorties d'air (1) de l'appareil de traitement d'air sont disposées au centre du côté inférieur de l'appareil de traitement d'air, et / ou des sorties d'air (11) sont disposées sur le côté de l'appareil de traitement d'air.

9. Système de ventilation selon l'une quelconque des revendications 1 à 8, **caractérisé en ce que** les sorties d'air de l'appareil de traitement d'air sont disposées sur le côté de l'appareil de traitement d'air.

10. Système de ventilation selon l'une quelconque des revendications 1 à 9, **caractérisé en ce que** la surface du au moins un espace intermédiaire (III), qui est orientée vers l'appareil de traitement d'air, représente au moins 50%, de préférence environ la totalité de la surface de l'appareil de traitement d'air, qui est orientée vers le au moins un espace intermédiaire (III).

11. Système de ventilation selon l'une quelconque des revendications 1 à 10, **caractérisé en ce que** les sections des orifices (IV) sont dimensionnées de manière à obtenir une vitesse optimale d'écoulement de l'air.

12. Système de ventilation selon l'une quelconque des revendications 1 à 11, **caractérisé en ce que** les sections des sorties d'air (I, II) sont dimensionnées de manière à obtenir une vitesse optimale d'écoulement de l'air.

13. Système de ventilation selon l'une quelconque des revendications 1 à 12, **caractérisé en ce que** le au moins un espace intermédiaire (III) entoure au moins en partie le au moins un canal de ventilation principal (3).

14. Système de ventilation selon l'une quelconque des revendications 1 à 13, **caractérisé en ce qu'**au moins deux canaux de ventilation principaux (3) présentent respectivement au moins un espace intermédiaire (III) séparé.
